# EUROPEAN PATENT SPECIFICATION

(11) **EP 0 553 262 B1**
(45) Date of publication and mention of the grant of the patent: **01.03.1995**
(21) Application number: 91920023.8
(22) Date of filing: 18.11.1991
(51) Int. Cl.: F02M 59/44, F16J 15/00, F16L 23/16, F02M 59/36

(54) **FUEL PUMP**
KRAFTSTOFFEINSPRITZPUMPE
POMPE DE CARBURANT

(30) Priority: 11.12.1990 GB 9026840
(43) Date of publication of application: 04.08.1993
(73) Proprietor: LUCAS INDUSTRIES PUBLIC LIMITED COMPANY, Solihull, West Midlands B91 3TX (GB)
(72) Inventor: LINTOTT, Edward Robert, Walthamstow, London E17 6AG (GB); TIMMS, Colin Thomas, Harrow, Middlesex HA3 6BH (GB)
(74) Representative: Thompson, George Michael
(86) International application number: GB9102026
(87) International publication number: WO9210669

(56) References cited:
- EP-A- 0 178 428
- EP-A- 0 372 712
- DE-A- 2 311 924
- DE-A- 3 700 358
- FR-A- 1 146 303
- GB-A- 958 345
- THE ENGINEER vol. 204, no. 5312, 15 November 1957, pages 703 - 704;

## Description

This invention relates to a unit injector for supplying fuel to an engine and comprising a main body in which is formed a bore which houses a cam actuated pumping plunger, a pumping chamber defined by a part of the bore and an outlet from the pumping chamber which is connected to a fuel injection nozzle mounted on the main body, an electromagnetically operated spill valve which is located on a separate body which is mounted on the main body, a spill passage formed in the main body, the spill passage communicating with the pumping chamber and with a connecting passage formed in said separate body, the main body and the separate body defining surfaces which are secured together, and a sealing zone defined on one of said surfaces about the passage opening thereon, the sealing zone engaging the other surface about the passage opening thereon.

An example of such a unit injector is seen in EP-A-0178428 and in the use of the injector the spill passage and the connecting passage contain fuel at a very high pressure. The provision of the sealing zone facilitates the formation of the seal between the surfaces to prevent escape of fuel from the passages. However, since the injector is mounted within a cover of the associated engine, any leakage of fuel which may take place must be contained to avoid contamination of the lubricating oil of the engine.

According to the invention in a pump injector of the kind set forth a depression is formed in said one surface about the sealing zone, and there is provided in said main body a drain passage communicating with said depression.

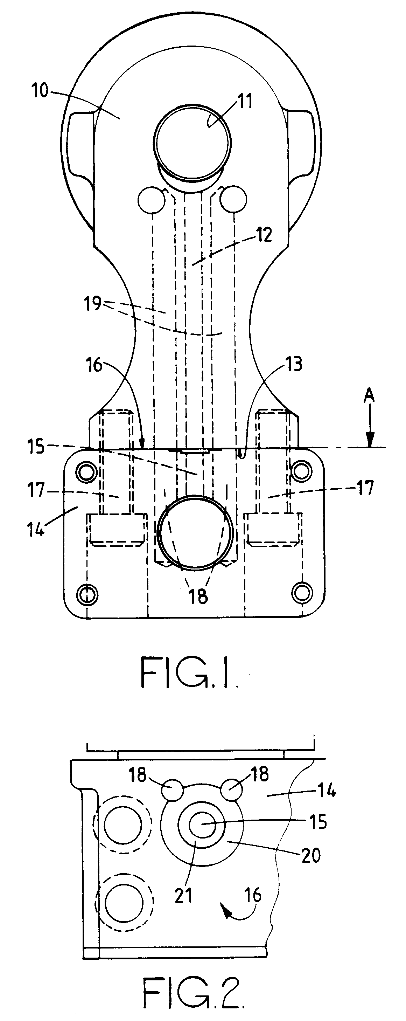

An example of a unit injector in accordance with the invention will now be described with reference to the accompanying drawings in which:-
Figure 1 is a plan view of part of a unit injector, and
Figure 2 is a view on the arrow A of part of the injector seen in Figure 1.

Referring to the drawings a pump injector includes a body 10 in which is formed a bore 11 in which is located a cam actuated pumping plunger not shown. A portion of the bore defines a pumping chamber which is connected to the inlet of a fuel injection nozzle mounted on the body 10 and also to a spill passage 12 which extends to a sealing face 13 machined on the body 10. Flow of fuel through the passage 12 is controlled by a spill valve which is mounted on a spill valve body 14 and in which is formed a continuation 15 of the passage 12. The spill valve body 14 is provided with a sealing face 16 and the two sealing faces are held in engagement by bolts 17 which secure the spill valve body 14 to the pump body 10. The spill valve body also defines a pair of return passages 18 through which fuel when the spill valve is opened, can flow from the passage 15 to return passages 19 formed in the pump body 10.

The pressure of fuel contained in the passages 12 and 15 when the spill valve is closed and during inward movement of the pumping plunger is extremely high and it is necessary to minimise so far as is possible, leakage from the passages 12 and 15. This is achieved by accurately forming the sealing surfaces 13 and 16. No sealing gasket is provided.

In the event that some leakage of fuel does take place, it is necessary to ensure that the fuel does not leak to the exterior of the bodies 10 and 14 since this fuel could contaminate the lubrication system of the associated engine. The surface 16 is therefore provided with an annular depression 20 which surrounds an annular sealing zone 21 about the passage 15. It is arranged that the passages 19 open into the depression 20 and since these passages in use, will be connected to a source of fuel at a low pressure, any fuel which does leak from the passages 12 and 15 across the seal defined by the sealing zone 21 and the surface 13, will collect in the depression and flow to the drain. The normal sealing engagement between the surfaces 16 and 13 is sufficient to withstand the fuel pressure in the passages 18 and 19.

## Claims

1. A unit injector for supplying fuel to an engine comprising a main body (10) in which is formed a bore (11) which houses a cam actuated pumping plunger, a pumping chamber defined by part of the bore, and an outlet from the pumping chamber which is connected to a fuel injection nozzle mounted on the main body (10), an electromagnetically operated spill valve which is located on a separate body (14) which is mounted on the main body (10), a spill passage (12) formed in the main body (10) the spill passage communicating with the pumping chamber and with a connecting passage (15) formed in the separate body (14), said main body (10) and said separate body (14) defining surfaces (13, 16) which are secured together, a sealing zone (21) defined on one of said surfaces about the passage opening thereon, said sealing zone engaging the other surface about the passage opening thereon, characterised by a depression (20) in said one surface about the sealing zone (21), and a drain passage (19) from said depression, said drain passage being formed in said main body (10).

2. A unit injector according to Claim 1,
characterised in that said drain passage (19) receives fuel from said spill passage (12) under the control of said electromagnetically operable valve.

## Patentansprüche

1. Einspritzeinheit zur Zuführung von Brennstoff zu einer Maschine, umfassend einen Hauptkörper (10), in dem eine Bohrung (11) geformt ist, welche einen nockenbetätigten Pumpenkolben einhaust, eine Pumpenkammer, gebildet durch einen Teil der Bohrung, und einen Auslaß von der Pumpenkammer, die an eine Brennstoffeinspritzdüse angeschlossen ist, die auf dem Hauptkörper (10) befestigt ist, ein elektromagnetisch betätigtes Überströmventil, welches auf einem separaten Körper (14) angeordnet ist, welches auf dem Hauptkörper (10) befestigt ist, ein in dem Hauptkörper (10) geformter Überströmdurchgang (12), der mit der Pumpenkammer in Verbindung steht und mit einem Verbindungsdurchgang (15), der in dem separaten Körper (14) geformt ist, wobei der Hauptkörper (10) und der separate Körper (14) Oberflächen (13, 16) bilden, die aneinander befestigt sind, eine Dichtzone (21), die auf einer der Oberflächen um die Durchgangsöffnungen darin gebildet sind, wobei die Dichtzone mit der anderen Oberfläche um die Durchgangsöffnung darin in Verbindung steht,
**gekennzeichnet durch** eine Vertiefung (20) in der einen Oberfläche um die Dichtzone (21) und einen in dem Hauptkörper (10) geformten Ablaufdurchgang (19) von dieser Vertiefung.

2. Einspritzeinheit nach Anspruch 1,
**dadurch gekennzeichnet,** daß der Ablaufdurchgang (19) Brennstoff von dem Überströmdurchgang (12) unter der Kontrolle des elektromagnetisch betätigten Ventils erhält.

## Revendications

1. Injecteur unitaire pour alimenter un moteur en carburant, comprenant un corps principal (10) dans lequel est pratiqué un alésage (11) dans lequel vient se loger un piston-plongeur entraîné par une came, une chambre de pompage définie par une partie de l'alésage, ainsi qu'une sortie provenant de la chambre de pompage, qui est reliée à un injecteur de carburant monté sur le corps principal (10), une soupape de trop-plein à mise en service électromagnétique qui est disposée sur un corps séparé (14) qui est monté sur le corps principal (10), un passage de trop-plein (12) pratiqué dans le corps principal (10), le passage de trop-plein communiquant avec la chambre de pompage et avec un passage de liaison (15) formé dans le corps séparé (14), ledit corps principal (10) et ledit corps séparé (14) définissant des surfaces (13, 16) qui sont fixées l'une à l'autre, une zone d'étanchéification (21) définie sur une desdites surfaces autour du passage s'ouvrant sur elle, ladite zone d'étanchéification venant se mettre en contact avec l'autre surface autour du passage s'ouvrant sur elle, caractérisé par une dépression (20) pratiquée dans ladite première surface autour de la zone d'étanchéification (21), et un passage de drain (19) provenant de ladite dépression, ledit passage de drain étant formé dans ledit corps principal (10).

2. Injecteur unitaire selon la revendication 1, caractérisé en ce que ledit passage de drain (19) reçoit du carburant depuis ledit passage de trop-plein (12) sous la commande de ladite soupape à mise en service électromagnétique.
